# FASCICULE DE BREVET EUROPEEN

(11) **EP 1 469 038 B1**
(45) Date de publication et mention de la délivrance du brevet: **23.04.2014**
(21) Numéro de dépôt: 04290977.0
(22) Date de dépôt: 13.04.2004
(51) Int. Cl.: C08L 95/00, E01C 19/10, E01C 7/18

(54) **Procédé de fabrication d'un enrobé bitumineux**
Verfahren zur Herstellung von Bitumenaggregat
Process for preparing a bituminous aggregate

(30) Priorité: 18.04.2003 FR 0304876
(43) Date de publication de la demande: 20.10.2004
(73) Titulaire: LEA-CO International, 91620 Nozay (FR); LEA-CO France, 91620 Nozay (FR)
(72) Inventeur: Romier, Alain, 91180 Saint-Germain les Arpajon (FR); Martineau, Yves, 78000 Versailles (FR); David, Jacques, 75116 Paris (FR); Audeon, Maurice, 27180 Le Plessis-Grohan (FR)
(74) Mandataire: Cabinet Plasseraud

(56) Documents cités:
- WO-A-99/51677
- FR-A- 2 553 125
- FR-A- 2 689 051
- GB-A- 430 979

## Description

La présente invention est relative aux procédés de fabrication d'enrobés bitumineux.

Plus particulièrement, l'invention concerne un procédé de fabrication d'un enrobé bitumineux comprenant des granulats enrobés de bitume, ce procédé comprenant au moins les étapes suivantes :
(a) on sèche par chauffage au moins certains des granulats,
(b) on réalise un mélange intermédiaire en enrobant avec du bitume chaud une première partie des granulats, sensiblement dépourvue de fines,
(c) on mélange une deuxième partie des granulats, comprenant des sables et des fines, avec le mélange intermédiaire obtenu à l'étape (b).

Le document US-A-3 868 262 décrit un exemple d'un tel procédé, dans lequel on chauffe la totalité des granulats au cours de l'étape (a), ce qui nécessite une dépense d'énergie importante compte tenu du fait que le mélange initial de granulats contient une quantité d'eau importante. De plus, le séchage et l'élévation de température entraînent un dégagement important de fumées contenant de la vapeur d'eau chargée en poussières : compte tenu de leur grande quantité, ces fumées sont difficiles à traiter et la mise en oeuvre des procédés de ce type entraîne donc une pollution non négligeable pour l'environnement.

Par ailleurs, le document FR-A-2 689 051 enseigne de réaliser un enrobé bitumeux dans lequel on réalise un mélange intermédiaire en enrobant des gravillons avec du bitume, puis on ajoute du sable à température ambiante au mélange de gravillons et de bitume.

La présente invention a notamment pour but de pallier ces inconvénients.

A cet effet, il est proposé un procédé du genre en question et tel que défini dans la revendication 1.

Grâce à ces dispositions, il n'est plus nécessaire de sécher les granulats contenant des fines, compris dans la deuxième partie des granulats.

Au contraire, on ne sèche que des gravillons et le cas échéant des sables sans fines, peu chargés en eau (la première partie des granulats est généralement 2 à 3 fois moins chargée en eau que la deuxième partie), plus faciles à sécher que des granulats contenant des fines et peu producteurs de poussières, de sorte qu'on limite fortement la consommation d'énergie et les émanations de fumées lors du chauffage.

De plus, le relativement faible volume de fumées produites lors du séchage permet de traiter plus efficacement ces fumées, d'où un gain très net pour l'environnement.

Enfin, le procédé selon l'invention permet également d'utiliser des installations plus petites et moins coûteuses que dans l'art antérieur. En effet, le sécheur qui chauffe les granulats peut être beaucoup moins important que dans l'art antérieur, de même que l'installation de dépoussiérage des fumées issues du sécheur.

Dans des modes de réalisation préférés de l'invention, on peut éventuellement avoir recours en outre à l'une et/ou à l'autre des dispositions spécifiées dans les revendications dépendantes.

D'autres caractéristiques et avantages de l'invention apparaîtront au cours de la description suivante d'une de ses formes de réalisation, donnée à titre d'exemple non limitatif, en regard du dessin joint.

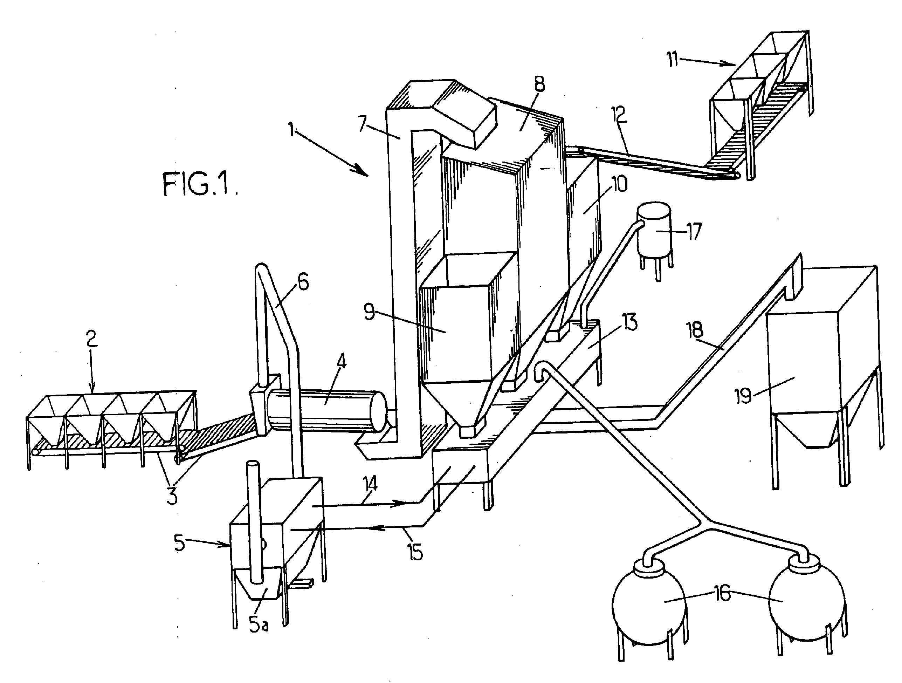

Sur le dessin, la figure 1 est un schéma de principe illustrant un dispositif adapté pour mettre en oeuvre un procédé selon l'invention.

Le procédé selon l'invention a pour but de fabriquer un enrobé bitumineux comprenant des granulats enrobés de bitume.

Ces granulats, qui forment le squelette minéral de l'enrobé, comprennent eux-mêmes :
- des fines, présentant par exemple une dimension inférieure ou égale à 80 µm,
- des sables, présentant par exemple une dimension inférieure à 4 mm, et contenant une quantité d'éléments de dimension inférieure à 63 µm,
- et des gravillons, ayant une granulométrie
   comprise entre 4 et 20 mm.

Tous ces granulats peuvent être obtenus à partir soit de minéraux naturels soit de matériaux de récupération (contenant des granulats et des liants naturels ou artificiels, par exemple des enrobés bitumineux recyclés).

Pour réaliser une masse donnée E d'enrobé bitumineux, on utilise une masse G de gravillons, une masse S de sables et fines, et une masse B de bitume, où E est sensiblement égal à G + S + B.

Comme représenté très schématiquement sur la figure 1, le procédé selon l'invention peut être mis en oeuvre dans une centrale d'enrobage 1 fixe ou mobile, en position stationnaire éloignée du chantier d'épandage ou se déplaçant sur le chantier d'épandage, qui peut par exemple être de type discontinu comme dans l'exemple représenté, ou encore de type continu (non représenté).

Cette centrale d'enrobage 1 peut comporter par exemple des trémies 2 de stockage de granulats, dans lesquelles est stockée une première partie des granulats entrant dans la composition de l'enrobé bitumineux. Cette première partie des granulats est exempte de fines et comprend par exemple tous les gravillons G et le cas échéant une partie des sables entrant dans la composition de l'enrobé à réaliser (notamment des sables grossiers exempts de fines, de dimension comprise par exemple 2 et 4 mm). Ladite première partie des granulats peut représenter par exemple de 25 à 80 %, avantageusement de 50 à 75 %, de la masse totale des granulats G + S.

La première partie des granulats présente par exemple une teneur massique en eau inférieure à 2,5 % (la première partie des granulats étant généralement constituée d'un mélange de granulats ayant des granulométrie différentes et stockés dans des trémies différentes, il s'agit de la teneur massique moyenne de ce mélange).

Un dispositif de transport 3 recueille les granulats de ladite première partie des granulats en sortie des trémies 2 (il peut s'agir par exemple d'un ou plusieurs tapis roulants et/ou élévateurs à godets et/ou autres dispositifs de transport), et les amène dans un sécheur 4.

Pour éliminer sensiblement toute l'eau contenue dans la première partie des granulats, le sécheur 4 chauffe ladite première partie des granulats à une température qui, dans tous les modes de réalisation de l'invention est supérieure à 100°C, soit comprise entre 100 et 160 °C, soit entre 180 et 220 °C. Compte tenu du fait que la première partie des granulats est exempte de fines, cette opération de séchage est aisée à mettre en oeuvre et ne requiert qu'un sécheur de relativement faible puissance, peu consommateur d'énergie.

Les fumées émises par le sécheur 4, en relativement faible quantité et assez peu chargées en poussières du fait de l'absence de fines dans la première partie des granulats, sont collectées par une conduite 6 qui les amène dans un ensemble dépoussiéreur et/ou condenseur 5. Cet ensemble 5 peut éventuellement comporter une réserve de fines 5a dans laquelle sont collectées les poussières séparées de ces fumées.

Après séchage dans le sécheur 4, les granulats de la première partie des granulats arrivent par exemple dans un élévateur 7 (de type à godets ou autre) qui monte ces granulats au sommet d'une trémie de stockage intermédiaire 8.

Par ailleurs, des fines peuvent être stockées dans un silo de stockage de fines 9. Les fines stockées dans la silo 9 peuvent comprendre notamment les poussières rassemblées dans le réservoir de fines 5a de l'ensemble condenseur/dépoussiéreur 5, ainsi que d'autres fines.

De plus, une deuxième partie des granulats, représentant par exemple entre 15 et 75 %, avantageusement 25 à 50 % de la masse totale des granulats, est stockée dans une trémie de stockage intermédiaire 10. Cette deuxième partie des granulats comprend des sables humides et des fines (ou encore un enrobé recyclé, concassé) à température ambiante, et ladite deuxième partie des granulats est reçue par la trémie 10 depuis des trémies de stockage de sable humide 11, par l'intermédiaire d'un dispositif de transport 12 comprenant par exemple des tapis roulants et/ou des élévateurs à godets ou autres. La deuxième partie des granulats peut présenter par exemple une teneur en eau comprise entre 2 et 5% en masse, avantageusement de l'ordre de 3,5% en masse.

Les trémies 8, 9, 10 alimentent un malaxeur 13 ou autre dispositif de mélange, servant à réaliser l'enrobé bitumineux.

Ce malaxeur 13 peut par exemple être de type à double paroi, de façon à être chauffé par circulation de vapeur d'eau dans la double paroi. A cet effet, une conduite 14 peut être prévue pour conduire la vapeur d'eau de l'ensemble condenseur/dépoussiéreur 5 vers la double paroi du malaxeur 13, laquelle vapeur d'eau est ensuite renvoyée vers l'ensemble condenseur/dépoussiéreur 5 par une autre conduite 15.

Le malaxeur 13 est par ailleurs relié à un stockage 16 de bitume chaud, associé à un système de dosage, de façon à pouvoir ajouter du bitume chaud sous forme fluide dans le malaxeur. Le bitume est maintenu de préférence à sa température d'utilisation (dépendante du grade du bitume et comprise par exemple entre 140 et 180°C environ) dans le stockage 16. Le bitume en question peut être dopé ou non par des adjuvants, tels que des produits tensioactifs pour faciliter, à la fois, la cohabitation avec l'eau, l'expansion du liant, et améliorer l'adhésivité de celui-ci sur le squelette minéral. Des additifs hygroscopiques peuvent être, en outre, finement dispersés dans le bitume afin de favoriser l'introduction et la répartition régulière de l'eau au sein du bitume lors des opérations d'enrobage explicitées ci-dessous.

Enfin, le malaxeur 13 peut également être relié :
- le cas échéant, à un stockage d'eau 17, associée à un système de dosage de façon à pouvoir éventuellement ajouter de l'eau (éventuellement additionnée de tensioactif ou d'un autre adjuvant) dans ledit malaxeur, par exemple au moyen d'une rampe d'aspersion (non représentée),
- éventuellement, à des moyens (non représentés) pour ajouter des adjuvants divers dans l'enrobé en cours de préparation.

Pour réaliser l'enrobé bitumineux voulu, on commence par réaliser dans le malaxeur 13 un mélange intermédiaire comprenant la première partie des granulats (provenant de la trémie 9) et la masse totale de bitume B (provenant du stockage 16) entrant dans la composition de la masse E d'enrobé à obtenir. Au cours de ce mélange initial, on peut introduire d'abord dans le malaxeur, soit le bitume (avec éventuellement et simultanément de l'eau), soit la première partie des granulats (suivie alors par le bitume plus éventuellement de l'eau).

Au cours de ce mélange, les granulats chauds et secs de la première partie des granulats sont complètement enrobés d'un film épais de bitume, qui est bien accroché à ces granulats.

Ce mélange initial est poursuivi pendant un temps suffisant (par exemple inférieur à 2 mn) pour obtenir un enrobage complet des gravillons et sables constituant la première partie des granulats.

On ajoute ensuite la deuxième partie des granulats, provenant de la trémie 10, au mélange intermédiaire ainsi obtenu, puis on mélange le tout pendant quelques minutes, par exemple environ 2 mn.

Au début de ce malaxage final, la deuxième partie des granulats est brutalement chauffée par transfert thermique avec le mélange intermédiaire, transfert thermique qui est facilité par le pont thermique que constitue le bitume enrobant la première partie des granulats.

Il en résulte une vaporisation d'au moins une partie de l'eau contenue dans la deuxième partie des granulats, et un équilibrage des températures des granulats, qui aboutit à une température homogène du mélange.

Des adjuvants peuvent le cas échéant être ajoutés également dans le malaxeur 5, par exemple de la chaux, ou encore des fines supplémentaires provenant de la trémie 9.

Dans un premier mode de réalisation de l'invention, la température initiale de la première partie des granulats est comprise entre 100 et 160°C, préférentiellement entre 110 et 130°C en sortie du sécheur 4, et cette température est choisie pour que l'enrobé bitumineux obtenu après mélange dans le malaxeur 5 soit à une température comprise entre 50 et 100°C, préférentiellement 60 à 100 °C.

A titre d'exemple, pour un mélange contenant 66 % de gravillons et 33 % de sables et fines, en chauffant les gravillons seuls à 150 °C dans le sécheur, on obtient une température finale d'enrobé de 95 - 100 °C après une minute de malaxage.

Dans ce premier mode de réalisation, une partie de l'eau contenue dans la deuxième partie des granulats n'est pas évaporée lors du contact initial entre les première et deuxième parties des granulats (le cas échéant, il peut être nécessaire d'ajouter de l'eau dans le malaxeur 13 au cours du mélange final, si la teneur en eau de la deuxième partie des granulats est insuffisante), ce qui permet une expansion du bitume. On génère ainsi une auto-expansion du bitume, sans devoir utiliser aucun moyen spécifique, contrairement aux procédés de moussage de l'art antérieur.

Du fait de cette expansion, les sables et fines de la deuxième partie des granulats sont parfaitement enrobés dans le bitume.

L'enrobé tiède ou semi tiède obtenu peut aisément être mis en oeuvre malgré sa température relativement faible. Ce mode de réalisation présente l'avantage de limiter fortement les émanations de produits organiques, notamment de composés organiques volatiles (COV) et d'éléments polycycliques aromatiques hydrogénés (HAP), nuisibles pour la santé humaine.

Des adjuvants peuvent le cas échéant être ajoutés également dans le malaxeur 5, par exemple de la chaux (vive ou hydratée), ou encore des fines supplémentaires provenant de la trémie 9.

De plus, une quantité d'eau supplémentaire, le cas échéant additionnée de tensioactifs, peut éventuellement être ajoutée au mélange vers la fin du malaxage. Cette eau forme une émulsion au sein du bitume, et améliore la maniabilité ultérieure de l'enrobé. En effet, on crée ainsi une émulsion de type eau - huile, et cette émulsion d'eau dans le bitume assure une bonne maniabilité malgré une température très basse de l'enrobé.

Selon un deuxième mode de réalisation de l'invention, la première partie des granulats chauffés dans le sécheur 4 est portée à une température comprise entre 180 et 220°C, préférentiellement de l'ordre de 200°C, et cette température est choisie de sorte que la température finale de l'enrobé après mélange dans le malaxeur 5 soit comprise entre 100 et 150°C, avantageusement de l'ordre de 130°C.

Dans ce deuxième mode de réalisation, la température élevée de la première partie des granulats entraîne une élimination brutale de l'eau, qui ne permet pas l'auto expansion du bitume, et on obtient ainsi un enrobé classique, à une température modérée, ce qui limite également les émanations de composés organiques. Dans ce deuxième mode de réalisation, il peut être avantageux d'ajouter de l'eau, éventuellement additionnée de tensioactifs, dans le malaxeur 5, à la fin du malaxage de l'enrobé : on facilite ainsi la mise en oeuvre ultérieure de l'enrobé, en le rendant plus malléable.

Dans tous les modes de réalisation de l'invention, on notera qu'un seul liant bitumineux est utilisé dans l'enrobé. De plus, on notera également que l'enrobé réalisé présente dès sa mise en oeuvre, ses caractéristiques mécaniques nominales, sans qu'il soit nécessaire d'attendre pendant une période de cure avant que ces performances ne soient atteintes.

Dans les deux modes de réalisation de l'invention, une fois le malaxage terminé, la masse E d'enrobé bitumineux est transférée par un dispositif de transport 18 vers une trémie de stockage d'enrobé 19, laquelle est adaptée pour charger l'enrobé bitumineux dans des camions ou d'autres engins.

Les caractéristiques finales de quelques exemples d'enrobés bitumineux réalisés par le procédé selon le premier mode de réalisation de l'invention, sont données ci-après.

### Exemple 1 :

Granulats de granulométrie 0-10 mm (porphyre) :
Passant à 4 mm : 40 %
Passant à 0,08 mm : 9 %

Grade de bitume : 70/100 dopé à 0,5 % d'un mélange «L200/240P» (CECA®)
Teneur en liant : 5,37 p.p.c.
% de vides duriez= 8,2
R= 5,6 Mpa
r/R = 0,9
Teneur en eau résiduelle : < 0,2 %
(où R est la résistance duriez à sec à 18° et r la Résistance duriez après immersion à 18°, r/R étant la résistance immersion/compression, selon la norme CEE n° 98 251 1)

### Exemple 2 :

Granulats de granulométrie 0-10 mm (porphyre).
Passant à 4 mm : 40 %
Passant à 0,08 mm : 9 %

Grade de bitume : 50/70 dopé à 0,2 % de «Wetfix» (AKZO^{®})
Teneur en liant : 5,42 p.p.c.
% de vides Duriez : 9,2
R = 6,6 Mpa
r/R = 0,8

### Exemple 3 :

Granulats de granulométrie 0-10 mm, contenant 40 % d'enrobés de récupération (recyclat) :
Passant à 4 mm : 35 %
Passant à 0,08 mm : 8,5 % Grade de bitume : 50/70 dopé à 0,8 % de «Wetfix» (AKZO^{®})
Teneur en liant total : 5,3 p.p.c. R = 6,2 Mpa
% de vides Duriez : 10,3 %.

## Revendications

1. Procédé de fabrication d'un enrobé bitumineux comprenant des granulats enrobés de bitume, lesdits granulats comprenant eux-mêmes des, éléments fins, des sables, et des gravillons de dimension comprise entre 4 mm et 20 mm, ce procédé comprenant au moins les étapes suivantes :
(a) on sèche par chauffage une première partie des granulats, sensiblement dépourvue de fines,
(b) on réalise un mélange intermédiaire en enrobant avec du bitume chaud ladite première partie des granulats,
(c) on malaxe une deuxième partie des granulats constituée de granulats humides à température ambiante comprenant des sables et des fines avec le mélange intermédiaire obtenu à l'étape (b),
**caractérisé en ce qu'**au cours de l'étape (a), on chauffe uniquement ladite première partie des granulats, à une température, au moins égale à 100°C, qui est soit comprise entre 100 et 160°C telle qu'à l'issue de l'étape (c), l'enrobé soit à une température comprise entre 60 et 100°C, et telle que une partie de l'eau contenue dans la deuxième partie des granulats n'est pas évaporée lors du contact initial entre les première et deuxième parties des granulats, ce qui permet une expansion du bitume,
soit comprise entre 180 et 220°C telle qu'à l'issue de l'étape (c), l'enrobé soit à une température comprise entre 100 et 150°C.

2. Procédé selon la revendication 1, dans lequel la deuxième partie des granulats comprend uniquement des sables et des fines.

3. Procédé selon l'une quelconque des revendications précédentes, dans lequel la première partie des granulats comporte en outre des sables de dimension supérieure à 2 mm.

4. Procédé selon l'une quelconque des revendications précédentes, dans lequel la deuxième partie des granulats représente 15 à 75 % en masse des granulats.

5. Procédé selon l'une quelconque des revendications précédentes, dans lequel la deuxième partie des granulats présente une teneur en eau comprise entre 2 et 5 % en masse, préférentiellement de l'ordre de 3,5 %, avant d'être mélangée avec ledit mélange intermédiaire.

6. Procédé selon l'une quelconque des revendications précédentes, dans lequel au cours de l'étape (a), on chauffe la première partie des granulats à une température comprise entre 110 et 130°C.

7. Procédé selon la revendication 6, dans lequel lors de l'étape (c), on introduit dans le mélange une quantité d'eau suffisante pour que ladite eau se vaporise partiellement et provoque une expansion du bitume.

8. Procédé selon l'une quelconque des revendications précédentes, dans lequel lors de l'étape (c), on introduit dans le mélange une quantité d'eau suffisante pour que de l'eau subsiste dans l'enrobé bitumineux à l'issue de l'étape (c).

9. Procédé selon l'une quelconque des revendications 1 à 6, dans lequel au cours de l'étape (a), on chauffe la première partie des granulats à une température de l'ordre de 200°C, et ladite température de la première partie des granulats est telle qu'à l'issue de l'étape (c), l'enrobé soit à une température de l'ordre de 130°C.

10. Procédé selon l'une quelconque des revendications précédentes, dans lequel tout le bitume entrant dans la composition de l'enrobé bitumineux est ajouté au mélange au cours de l'étape (b).

## Patentansprüche

1. Verfahren zur Herstellung eines Bitumenaggregats, umfassend Granulate, die von Bitumen ummantelt sind, wobei die Granulate an sich feine Elemente, Sande, und Splitt mit einer Größe zwischen 4 mm und 20 mm umfassen, wobei das Verfahren mindestens die folgenden Schritte umfasst:
(a) Trocknen eines ersten Teils der Granulate, der im Wesentlichen ohne Feinanteile ist, durch Erwärmen,
(b) Herstellen eines intermediären Gemischs durch ummanteln des ersten Teils von Granulaten mit warmem Bitumen,
(c) Verkneten eines zweiten Teils von Granulaten, bestehend aus bei Umgebungstemperatur befeuchteten Granulaten, der Sande und Feinanteile umfasst, mit dem intermediären Gemisch, das in Schritt (b) erhalten wird, **dadurch gekennzeichnet, dass** während Schritt (a) ausschließlich der erste Teil von Granulaten erwärmt wird, auf eine Temperatur von mindestens gleich 100 °C, umfassend zwischen 100 und 160 °C, sodass am Ende von Schritt (c) die Ummantelung bei einer Temperatur ist, die zwischen 60 und 100 °C ist, und dass ein Teil des Wassers, das in dem zweiten Teil von Granulaten enthalten ist, nicht verdampft ist aufgrund des anfänglichen Kontakts zwischen den ersten und zweiten Teilen von Granulaten, was eine Expansion des Bitumens erlaubt,
umfassend zwischen 180 und 220 °C, sodass am Ende von Schritt (c) die Ummantelung bei einer Temperatur ist, die zwischen 100 und 150 °C ist.

2. Verfahren nach Anspruch 1, worin der zweite Teil von Granulaten ausschließlich Sande und Feinanteile umfasst.

3. Verfahren nach einem der vorhergehenden Ansprüche, worin der erste Teil von Granulaten weiterhin Sande mit einer Größe über 2 mm enthält.

4. Verfahren nach einem der vorhergehenden Ansprüche, worin der zweite Teil von Granulaten 15 bis 75 Masse-% der Granulate darstellt.

5. Verfahren nach einem der vorhergehenden Ansprüche, worin der zweite Teil von Granulaten einen Wassergehalt aufweist, umfassend zwischen 2 und 5 Masse-%, vorzugsweise in der Größenordnung von 3,5 Masse-%, vor Mischen mit dem intermediären Gemisch.

6. Verfahren nach einem der vorhergehenden Ansprüche, worin während Schritt (a) der erste Teil von Granulaten auf eine Temperatur erwärmt wird, die zwischen 110 °C und 130 °C umfasst.

7. Verfahren nach Anspruch 6, worin während Schritt (c) in das Gemisch eine Wassermenge eingebracht wird, die dafür ausreichend ist, dass das Wasser teilweise verdampft und eine Expansion des Bitumens bewirkt.

8. Verfahren nach einem der vorhergehenden Ansprüche, worin während Schritt (c) in das Gemisch eine Wassermenge eingebracht wird, die dafür ausreichend ist, dass Wasser in dem Bitumenaggregat am Ende von Schritt (c) vorliegt.

9. Verfahren nach einem der Ansprüche 1 bis 6, worin während Schritt (a) der erste Teil von Granulaten auf eine Temperatur in der Größenordnung von 200 °C erwärmt wird und die Temperatur des ersten Teils von Granulaten so ist, dass am Ende von Schritt (c) das Aggregat bei einer Temperatur in der Größenordnung von 130 °C ist.

10. Verfahren nach einem der vorhergehenden Ansprüche, worin das gesamte Bitumen, das in die Zusammensetzung des Bitumenaggrgats eintritt zu dem Gemisch während Schritt (b) zugegeben wird.

## Claims

1. A method of manufacturing a bituminous coated aggregate mix comprising aggregate coated with bitumen, said aggregate itself comprising fines, sands and chippings having a dimensions comprised between 4 mm and 20 mm, said method comprising at least the following steps:
(a) at least a first portion of the aggregate that has substantially no fines, is dried by heating;
(b) an intermediate mix is formed by coating said first portion of the aggregate with hot bitumen; and
(c) a second portion of the aggregate comprised of humid aggregate at ambient temperature, that comprises sand and fines, is mixed with the intermediate mix obtained at step (b);
**characterized in that**, during step (a), only said first portion of the aggregate is heated, at a temperature of at least 100 °C, which is
either comprised between 100 and 160 °C so that at the end of step (c), the coated aggregate mix is at a temperature comprised between 60 and 100 °C, and so that part of the water contained in the second portion of the aggregate is not evaporated during the initial contact between the first and second portions of the aggregate,
or comprised between 180 and 220 °C so that at the end of step (c), the coated aggregate mix is at a temperature comprised between 100 and 150 °C.

2. A method according to claim 1, in the second portion of the aggregate comprises sand and fines only.

3. A method according to any preceding claim, in which the first portion of the aggregate further comprises sand having a particle size greater than 2 mm.

4. A method according to any preceding claim, in which the second portion of the aggregate represents in the range 15% by weight of the aggregate to 75% by weight of the aggregate.

5. A method according to any preceding claim, in which the second portion of the aggregate has a water content lying in the range 2% by weight to 5% by weight, and preferably about 3.5% by weight, before it is mixed with said intermediate mix.

6. A method according to any preceding claim, in which during step (a) the first portion of the aggregate is heated to a temperature between 110°C and 130°C.

7. A method according to claim 6, in which, during step (c), a quantity of water is added to the mix, which quantity of water is sufficient for said water to vaporize in part, and to cause the bitumen to expand.

8. A method according to any preceding claim, in which, during step (c), a quantity of water is added to the mix, which quantity of water is sufficient for water to remain in the bituminous coated aggregate mix after step (c).

9. A method according to any one of claims 1 to 6, in which, during step (a), the first portion of the aggregate is heated to a temperature of about 200°C, and said temperature of the first portion of the aggregate is such that, after step (c), the coated aggregate mix is at a temperature of about 130°C.

10. A method according to any preceding claim, in which all of the bitumen that enters into the composition of the bituminous coated aggregate mix is added to the mix during step (b).
